# EUROPÄISCHE PATENTSCHRIFT

(11) **EP 2 386 586 B1**
(45) Veröffentlichungstag und Bekanntmachung des Hinweises auf die Patenterteilung: **27.09.2017**
(21) Anmeldenummer: 11161592.8
(22) Anmeldetag: 08.04.2011
(51) Int. Cl.: C08G 18/10, C08G 18/66, C08G 18/76, C08G 18/79, C09J 175/04, C08K 5/10

(54) **PU-Klebstoff mit Fließgrenze**
PU adhesive with flow limit
Colle PU dotée d'une limite d'écoulement

(30) Priorität: 27.04.2010 DE 102010028269
(43) Veröffentlichungstag der Anmeldung: 16.11.2011
(73) Patentinhaber: Henkel AG & Co. KGaA, 40589 Düsseldorf (DE)
(72) Erfinder: Thiele, Lothar, 40764 Langenfeld (DE); Lohr, Christoph, 40822 Mettmann (DE); Okamoto, Oliver-Kei, 40213 Düsseldorf (DE)

(56) Entgegenhaltungen:
- WO-A1-03/006521
- WO-A1-2006/042305
- WO-A1-2007/124868
- WO-A1-2009/144280

## Beschreibung

Die Erfindung betrifft bei Raumtemperatur pastöse reaktive 1K- oder 2-Komponenten Klebstoffe auf Basis von Polyurethanprepolymeren mit einem geringen Gehalt an monomeren Isocyanaten, die eine die Viskosität absenkende reaktive Verbindung enthalten. Diese Klebstoffe sollen bei der Applikation nicht verlaufen, d.h. sie sollen eine Fließgrenze aufweisen.

Aus der DE 19957351 sind Klebstoffe bekannt auf Basis monomerarmer PU-Prepolymere, die durch Umsetzung von niedermolekularen Diolen mit Diisocyanaten hergestellt werden, die anschließend von monomeren Diisocyanaten befreit werden. Die NCO-Gruppen-haltigen Prepolymere werden anschließend mit Diolen umgesetzt, und es werden reaktive Polymere als Schmelzklebstoffe erhalten. Die Schmelzviskosität der Klebstoffe liegt über 4,5 Pas bei 130°C, sie sind bei Raumtemperatur fest.

Aus der DE 10150722 sind feste Klebstoffzusammensetzungen bekannt, die aus 2,4'-Diphenylmethandiisocyanat hergestellt werden, wobei diese Isocyanate mit niedermolekularen Polyolen umgesetzt werden. Dabei soll nur ein geringer Teil an Restmonomeren im Klebstoff enthalten sein. Bei Raumtemperatur flüssige Klebstoffe sind nicht beschrieben.

In der WO 2003/006521 werden reaktive Polyurethane mit einem NCO-Gehalt von 4 bis 12% NCO und einem Gehalt an monomeren asymmetrischen Diisocyanaten von 0,01 bis 0,3% offenbart, die erhältlich sind durch Reaktion von I. mindestens einem monomeren asymmetrischen Diisocyanat mit einem Molekulargewicht von 160 g/mol bis 500 g/mol mit II. mindestens einem Diol mit einem Molekulargewicht von 60 g/mol bis 2000 g/mol, wobei das Verhältnis der Isocyanatgruppen zu Hydroxylgruppen von 1,05 zu 1 bis 2,0 zu 1 beträgt, a) bei der Temperatur von 20 °C bis 130 °C, sowie b) gegebenenfalls in Gegenwart eines Katalysators und c) gegebenenfalls in Gegenwart eines aprotischen Lösungsmittels ohne zusätzliche Aufarbeitungs- und Reinigungsschritte. Derartige reaktive Polyurethane sollen sich zur Herstellung von reaktiven ein- und zweikomponentigen Kleb- und Dichtstoffen, Montageschäumen, Vergussmassen sowie von Weich-, Hart- und Integralschäumen, die ggf. lösungsmittelhaltig sein können, sowie als Komponente zur Herstellung von reaktiven Schmelzklebstoffen eignen. Als wesentlicher Vorteil dieser reaktiven Polyurethane gegenüber bekannten reaktiven Polyurethanen mit geringem Anteil an monomeren Diisocyanaten wird die Freiheit von Nebenprodukten, wie sie üblicherweise bei der thermischen Aufarbeitung reaktiver Polyurethane entstehen sollen, und ein besonders kostengünstiges Herstellungsverfahren beschrieben. 2K-Polyurethanklebstoffe enthaltend ein Polyurethanprepolymer mit NCO-Gruppen und einem zahlenmittleren Molekulargewicht (Mn), wie mit GPC bestimmbar, von unter 5000 g/mol werden nicht offenbart.

In der WO 2009/144280 werden einkomponentige Polyurethan Kleb- und/oder Dichtstoff-Zusammensetzungen beschrieben, die (A) mindestens ein monomerenarmes NCO-terminiertes PU-Prepolymer mit einem NCO-Gehalt von kleiner als 20% und (B) mindestens ein monomerenarmes Polyisocyanat mit einer Isocyanat-Funktionalität von größer oder gleich 2,0 und einem NCO- Gehalt von größer als 10% enthalten, wobei die Polymermischung einen Gehalt an am Aufbau der Komponenten (A) und/oder (B) beteiligten monomeren Diisocyanaten von weniger als 0,5 Gew.% je spezifischem Diisocyanat hat. Diese einkomponentigen Polyurethan-Kleb- oder Dichtstoff-Zusammensetzungen sollen sich zur Verwendung als Holzklebstoff gemäß den Erfordernissen der DIN EN 204 Beanspruchungsgruppe D4 und mit einer Festigkeit von größer oder gleich 6,0 N/mm 2 nach der DIN EN 14257 eignen. 2K-Polyurethanklebstoffe werden nicht offenbart.

Reaktive feuchtigkeitshärtende Polyurethan-Kleb-/Dichtstoffe enthalten Polymere mit Urethangruppen, ggf. Harnstoffgruppen und reaktiven Isocyanatgruppen. Für viele Anwendungsfälle sind diese Zusammensetzungen wegen der enthaltenen Harnstoff- und Urethangruppen lösungsmittelhaltig, sehr hochviskos oder pastös. Sie werden deshalb bei erhöhter Temperatur zwischen etwa 50°C und etwa 100°C verarbeitet, oder es werden organische Lösemittel zugesetzt und sie werden bei Raumtemperatur verarbeitet. Für Anwendungsgebiete, bei denen ein Klebstoff in Kartuschenform eingesetzt wird, ist eine Erwärmung nicht zweckmäßig. Dafür werden Klebstoffe mit bei Raumtemperatur niedriger Viskosität eingesetzt.

Um die Viskosität solcher Prepolymere mit nur mit einem geringen Gehalt an monomeren Diisocyanaten zu vermindern, sind üblicherweise niedermolekulare Verbindungen enthalten. Es können inerte Lösemittel zugegeben werden, z.B. Kohlenwasserstoffe oder Weichmacher. Solche Zusätze, die notwendig sind, um bei Raumtemperatur eine geeignete Applikationsviskosität der Klebstoffe zu erhalten, haben verschiedene Nachteile. Beispielsweise sind organische Lösemittel in der technischen Anwendung häufig unerwünscht. Diese flüchtigen Verbindungen sind oft gesundheitlich bedenklich. Außerdem müssen Lösemittel vor dem Zusammenfügen der Substrate verdampfen, was eine Applikation in dicken Schichten erschwert, oder es werden lange Verklebungszeiten erhalten. Außerdem haben viele Lösemittel den Nachteil, bei der Verklebung von Kunststoffsubstraten diese anzulösen und so an der Oberfläche zu zerstören. Werden Weichmacher zugegeben, so können diese in der Klebefuge migrieren und ggf. danach Haftung beeinträchtigen.

Es sind auch 1K- oder 2K-Systeme bekannt, die monomere aromatische oder aliphatische Diisocyanate enthalten. Das sind häufig Anteile an nicht umgesetzten Isocyanaten der Polyurethansynthese. Diese senken auch in geringen Anteilen von wenigen Prozent die Viskosität. Solche monomeren Isocyanate sind aber aus Gesundheits- und Arbeitsschutz möglichst zu vermeiden. Ein allgemeines Problem ist dabei, dass, wenn die Viskosität der Klebstoffe für eine einfache Applikation herabgesetzt wird, diese gut fließfähigen Produkte an senkrechten Flächen nicht angewendet werden können. Selbst bei Applikation in waagerechter dicker Schicht ist es bekannt, dass der Klebstoff von selbst nach unten oder zur Seite abläuft. Damit ist eine gleichmäßige Verklebung von großen unebenen Flächen nicht möglich. Werden die Mengen der Zusatzstoffe vermindert, ist die Viskosität aber dann so hoch, dass eine Applikation ohne technische Geräte oder ohne Erwärmen nicht mehr möglich ist.

Trotz des bekannten Standes der Technik besteht also weiterhin Bedarf an verbesserten Polyurethan-Zusammensetzungen mit einem niedrigen Anteil an monomeren Diisocyanaten, deren Viskosität eine Applikation bei Raumtemperatur zulässt. Sie sollen eine gute Haftung zu verschiedenen Oberflächen aufweisen. Weiterhin sollen diese Klebstoffe in unvernetztem Zustand eine Fließgrenze aufweisen, so dass aufgebrachte Mengen nicht von selbst verfließen. Dabei sollen mögliche, die Haftung beeinträchtigende migrierende Bestandteile, vermieden werden.

Die Aufgabe wird gelöst durch die Bereitstellung eines monomerarmen vernetzbaren 2K-Polyurethanklebstoffs bestehend aus einer NCO-Gruppen-haltigen Komponente A und zusätzlich einer Komponente B, die Polyole enthält, wobei beide Komponenten getrennt gelagert werden, enthaltend mindestens ein Polyurethanprepolymer mit NCO-Gruppen und einem zahlenmittleren Molekulargewicht (Mn), wie mit GPC bestimmbar, von unter 5000 g/mol mit einem Gehalt an monomeren Diisocyanaten unter 0,5 Gew.% bezogen auf das Prepolymer, wobei bezogen auf den Klebstoff 1 bis 30 Gew.-% Pigmente und/oder Füllstoffe sowie 1 bis 40 Gew.% Oligomere von aliphatischen Diisocyanaten enthalten sind, sowie übliche Additive und Hilfsstoffe, ausgewählt aus Thixotropiermitteln, Katalysatoren, Harzen, Alterungsschutzmitteln, Stabilisatoren, Farbstoffen, Haftvermittlern oder Netzmitteln, wobei Komponente A 3 bis 35 Gew.-% des PU-Prepolymers mit NCO-Gruppen, 2 bis 40 Gew.-% der Oligomere von aliphatischen Isocyanaten, 0,5 bis 15 Gew.-% der Pigmente und/oder Füllstoffe und/oder Additive enthält, und Komponente B 5 bis 40 Gew.-% di- oder/und polyfunktionelle Polyole sowie 5 bis 40 Gew.-% der Pigmente, Füllstoffe und/oder Additive enthält, wobei die Summe aller Bestandteile aus Komponenten A und B 100 % ergibt.

Es handelt sich dabei um einen 2K-PU-Klebstoff, der aus einer Komponente A und zusätzlich einer OH-haltigen Komponente B besteht.

Die geeigneten PU-Prepolymere und die NCO-Gruppe aufweisenden Oligomere werden dann in der Isocyanatkomponente A eingesetzt. Es handelt sich dabei um an sich bekannte Umsetzungsprodukte aus Polyolen und Polyisocyanaten, die sich aber durch einen geringen Anteil an monomeren, nicht umgesetzten Diisocyanaten auszeichnen.

Als Polyole für die Synthese des PU-Prepolymeren können dabei Polyhydroxyverbindungen eingesetzt werden, ausgewählt aus Polyetherpolyolen oder Polyesterpolyolen. Als Polyole eignen sich vorzugsweise Polyhydroxyverbindungen mit zwei bzw. drei Hydroxylgruppen pro Molekül im Molekulargewichts-Bereich von 200 bis 3000 g/mol, vorzugsweise im Bereich von 400 bis 2000 g/mol.

Beispiele sind di- und/oder trifunktionelle Polypropylenglycole oder Polyethylenglycole, es können auch statistische und/oder Blockcopolymere des Ethylenoxids und Propylenoxids eingesetzt werden. Eine weitere Gruppe von einzusetzenden Polyethern sind die Polytetramethylenglycole (Poly(oxytetramethylen)glycol, Poly-THF), die z.B. durch die saure Polymerisation von Tetrahydrofuran hergestellt werden.

Weiterhin sind als Polyole solche Polyester geeignet, die durch Kondensation von Di- bzw. Tricarbonsäuren, wie z.B. Adipinsäure, Sebacinsäure, Glutarsäure, Azelainsäure Korksäure, Undecandisäure Dodecandisäure, 3,3-Dimethylglutarsäure,Terephthalsäure, Isophthalsäure, Hexahydrophthalsäure, Dimerfettsäure oder deren Mischungen mit niedermolekularen Diolen bzw. Triolen wie z.B. Ethylenglycol, Propylenglycol, Diethylenglycol, Triethylenglycol, Dipropylenglycol, 1,4-Butandiol, 1,6-Hexandiol, 1,8-Octandiol, 1,10-Decandiol, 1,12-Dodecandiol, Dimerfettalkohol, Glycerin, Trimethylolpropan oder deren Mischungen hergestellt werden können. Eine weitere Gruppe der erfindungsgemäß einzusetzenden Polyole sind die Polyester auf der Basis von ε-Caprolacton, auch Polycaprolactone genannt. Dabei soll das Molekulargewicht solcher Polyesterpolyole unter 2000 g/mol betragen.

Es können aber auch Polyesterpolyole oleochemischer Herkunft verwendet werden. Diese können natürlichen Ursprungs sein oder sie werden modifiziert. Derartige Polyesterpolyole können beispielsweise durch vollständige Ringöffnung von epoxidierten Triglyceriden eines wenigstens teilweise olefinisch ungesättigte Fettsäureenthaltenden Fettgemisches mit einem oder mehreren Alkoholen mit 1 bis 12 C-Atomen und anschließender partieller Umesterung der Triglycerid-Derivate zu Alkylesterpolyolen mit 1 bis 12 C-Atomen im Alkylrest hergestellt werden. Es kann sich beispielsweise auch um Ricinusöl handeln.

Weitere geeignete Polyole sind Polycarbonat-Polyole, Polycaprolactondiole, Dimerdiole oder Hydroxy-funktionelle Polybutadiene. Diese können ggf. anteilsweise in der Polyolmischung enthalten sein.

Es können auch aliphatische Alkylendiole enthalten sein. Es kann sich dabei um lineare oder verzweigte C₂ bis C₂₄ Diole handeln, die endständig oder lateral in der Kohlenstoffkette OH-Gruppen aufweisen. Beispiele sind Ethylenglykol, Propylenglykol, Butandiol-1,4, Pentandiol-1,5, Hexandiol-1,6, Heptandiol-1,7, Octandiol-1,8 und deren höhere Homologen oder Isomeren. Ebenfalls geeignet sind höherfunktionelle Alkohole wie beispielsweise Glycerin, Trimethylolpropan, Pentaerythrit oder Zuckeralkohole. Solche höherfunktionellen Polyole sind aber weniger bevorzugt und sollen nur in geringen Anteilen in den Polyolen enthalten sein.

Die Polyole sollen bevorzugt flüssig sein. Das Molekulargewicht soll bevorzugt unter 2000 g/mol betragen insbesondere unter 1500 g/mol (zahlenmittleres Molekulargewicht, M_{N}, wie durch GPC bestimmbar). Dabei ist es bevorzugt, wenn Diole eingesetzt werden oder Mischungen derselben. Eine besondere Ausführungsform setzt Polyetherdiole ein; eine andere Ausführungsform setzt Ricinusöl als Polyesterpolyol ein; es können auch Mischungen von Polyolen eingesetzt werden.

Monomere Diisocyanate, die für die Herstellung der Prepolymere geeignet sind, sind solche aromatischen, aliphatischen oder cycloaliphatischen Di- oder Triisocyanate, deren Molekulargewicht kleiner als 500 g/mol ist. Beispiele für geeignete aromatische Diisocyanate sind alle Isomeren des Toluylendiisocyanats (TDI) entweder in isomerenreiner Form oder als Mischung mehrerer Isomerer, Naphthalin-1,5-diisocyanat (NDI), Naphthalin-1,4-diisocyanat (NDI), Diphenylmethan-4,4'-diisocyanat (MDI), Diphenylmethan-2,4'-diisocyanat sowie Mischungen des 4,4'-Diphenylmethandiisocyanats mit dem 2,4'-Isomeren, Xylylen-diisocyanat (XDI), 4,4'-Di-phenyldimethylmethandiisocyanat, Di- und Tetraalkyl-diphenylmethan-diisocyanat, 4,4'-Dibenzyldiisocyanat, 1,3-Phenylendiisocyanat, 1,4-Phenylen-diisocyanat. Beispiele für geeignete cycloaliphatische Diisocyanate sind die Hydrierungsprodukte der vorgenannten aromatischen Diisocyanate wie z.B. das 4,4'-Dicyclohexylmethandiisocyanat (H12MDI), 1-Isocyanatomethyl-3-isocyanato-1,5,5-trimethyl-cyclohexan (Isophorondiisocyanat, IPDI), Cyclohexan-1,4-diisocyanat, hydriertes Xylylen-diisocyanat (H₆XDI), 1-Methyl-2,4-diisocyanato-cyclohexan, m- oder p-Tetramethylxylendiisocyanat (m-TMXDI, p-TMXDI) und Dimerfettsäure-Diisocyanat. Beispiele für aliphatische Diisocyanate sind Tetramethoxybutan-1,4-diisocyanat, Butan-1,4-diisocyanat, Hexan-1,6-diisocyanat (HDI), 1,6-Diiso-cyanato-2,2,4-trimethylhexan, 1,6-Diisocyanato-2,4,4-trimethylhexan, Lysindiisocyanat sowie 1,12-Dodecandiisocyanat (C₁₂DI).

Eine Ausführungsform setzt Isocyanate ein, die Isocyanatgruppen unterschiedlicher Reaktivität aufweisen. Beispiele dafür sind die Isomeren des Toluylendiisocyanats (TDI), Naphthalin-1,4-diisocyanat (NDI), Diphenylmethan-2,4'-diisocyanat (MDI), Isophorondiisocyanat (IPDI) oder hydriertes 2,4'-MDI. Allgemein werden bevorzugt aromatische Diisocyanate eingesetzt.

Die Umsetzung der monomeren Diisocyanate mit den Polyolen erfolgt dabei in an sich bekannter Weise, ggf. unter Zusatz von aprotischen Lösungsmitteln. Um die Bildung höhermolekularer Oligomere zu vermindern, ist es vorteilhaft, einen Überschuss an Diisocyanaten im Verhältnis zu den Diolen einzusetzen. Die Bildung von höhermolekularen Prepolymeren soll weitgehend vermieden werden.

In einer Ausführungsform kann nach Abschluss der Reaktion das Umsetzungs-produkt möglichst weitgehend von monomerem Diisocyanat befreit werden. Der Reinigungsschritt kann nach an sich bekannten Verfahren erfolgen. Bevorzugt kann bei der Verwendung von monomeren Diisocyanaten das überschüssige monomere Diisocyanat destillativ aus dem Reaktionsgemisch entfernt werden. Hierzu erfolgt die Destillation vorzugsweise im Vakuum mit Hilfe eines Dünnschichtverdampfers oder eines Dünnfilmverdampfers. Derartige Destillationsverfahren sind in der Literatur beschrieben. In einer weiteren bevorzugten Ausführungsform wird das PU-Prepolymer durch Auswahl von asymmetrischen Isocyanaten als Ausgangsmaterial so hergestellt, dass nur geringe Anteile von monomeren Isocyanaten enthalten sind.

Die geeigneten PU-Prepolymere weisen NCO-Gruppen auf, sollen aber maximal 0,5 Gew.-% monomeres Diisocyanat, bezogen auf das Prepolymer, enthalten, insbesondere weniger als 0,2 Gew.-%. Die entstehenden monomerarmen PU-Prepolymere sind im lösemittelfreien Zustand hochviskos, beispielsweise mit einer Viskosität bei 50°C von 10000 bis 400000 mPas (Brookfield-Viskosimeter, nach EN ISO 2555, bei angegebener Temperatur) oder sie besitzen eine niedrige Schmelztemperatur, beispielsweise unterhalb von 80°C. Bevorzugt sind solche Prepolymere bei Raumtemperatur (25°C) fließfähig.

Ein erfindungsgemäß notwendiger Bestandteil des Klebstoffs sind als Zusatzmittel Oligomere von aliphatischen Diisocyanaten. Es kann sich dabei um Derivate des Isocyanatomethyl-3-isocyanato-1,5,5-trimethyl-cyclohexan (IPDI), 4,4'hexan-1,6-diisocyanat (HDI), hydriertes Diphenylmethandisocyanat (H12- MDI) oder Cyclohexan-1,4-diisocyanat handeln, beispielsweise Biurete, Uretdione oder Isocyanurate. Insbesondere sind bei 20°C flüssige Derivate geeignet, beispielsweise trifunktionelle Derivate. Ganz besonders bevorzugt werden als Zusatzmittel HDI-Isocyanurate, HDI-Biurete, HDI-Uretdione eingesetzt.

Die Menge des Zusatzmittel kann in weiten Bereichen variieren, beispielsweise von 1 bis 40 Gew-%, insbesondere von 2 bis 25 Gew-%, bevorzugt bis 20 Gew.-% bezogen auf den gesamten Klebstoff. Dabei sollen diese Zusatzmittel monomerarm vorliegen, d.h. der Gehalt an monomeren Diisocyanaten soll unter 0,5% bezogen auf das Zusatzmittels liegen. In besonderen Ausführungsformen soll die Menge des Zusatzmittels kleiner als die Menge des Prepolymeren sein.

Der PU-Klebstoff kann gegebenenfalls ein oder mehrere weitere Additive enthalten. Darunter werden Stoffe verstanden, die in der Regel zugesetzt werden, um die Eigenschaften des Klebstoffs zu verändern, z.B. deren Verarbeitbarkeit, Lagerfähigkeit und auch Gebrauchseigenschaften dem konkreten Anwendungsgebiet anzupassen. Beispiele dafür sind Thixotropiermittel, Katalysatoren, Harze, Alterungsschutzmittel, Stabilisatoren, Farbstoffe, Haftvermittler oder Netzmittel.

Um die Viskosität einzustellen, ist es beispielsweise in einer Ausführungsform möglich, dass die erfindungsgemäßen PU-Klebstoffe einen Anteil von 0,5 bis 25 Gew.-% Estern von Mono- oder Dicarbonsäuren enthalten. Diese müssen mit dem Prepolymer verträglich sein. Es kann sich dabei beispielsweise um C₂ bis C₂₄- Mono- oder Dicarbonsäureester handeln. Die Alkoholkomponente wird aus einwertigen Alkoholen mit 1 bis 12 C-Atomen ausgewählt. Dabei muss die Summe aller C-Atome der Ester mindestens 8 betragen.

Bei den enthaltenen Estern dieser Ausführungsform handelt es sich um solche, die einen Siedepunkt oberhalb von 160°C aufweisen, bevorzugt über 200°C, insbesondere oberhalb von 250°C. Es kann sich um Ester von gesättigten oder ungesättigten aliphatischen, cycloaliphatischen oder aromatischen Carbonsäuren handeln. Beispiele für geeignete Carbonsäuren sind aliphatische Carbonsäuren wie Bernsteinsäure, Adipinsäure, Sebacinsäure, ungesättigte Carbonsäuren wie Ölsäure, Linolensäure, Azelainsäure; aromatische Carbonsäuren wie Benzoesäure, Isophthalsäure, Phthahlsäure; cyclische Carbonsäure wie Cyclohexacarbonsäure oder Cyclohexandicarbonsäure. Diese Säuren sollen vollständig verestert vorliegen. Eine besondere Ausführungsform verwendet aliphatische gesättigte oder ungesättigte Carbonsäureester aus C₆ bis C₂₂- Carbonsäuren, insbesondere aliphatische lineare oder verzweigte Carbonsäuren mit 10 bis 22 C-Atomen. Ganz besonders bevorzugt sind Monocarbonsäureester. Bevorzugt liegen Mischungen von Estern unterschiedlicher Carbonsäuren vor, insbesondere aus natürlichen Rohstoffen. Die Carbonsäureester sollen bei 25°C eine Viskosität unter 1000 mPas aufweisen, bevorzugt unter 200 mPas, insbesondere unter 100 mPas.

Weiterhin enthält der erfindungsgemäße Klebstoff Füllstoffe und/oder Pigmente. Als Füllstoffe geeignet sind gegenüber Isocyanaten nicht reaktive anorganische Verbindungen wie beispielsweise Calciumcarbonat, beschichtetes Calciumcarbonat, Calcium-Magnesium-Carbonate, Bariumsulfat, Aluminiumoxide, gefällte oder pyrogene Kieselsäuren, Zeolithe, Bentonite, Glimmer, Quarzsand, Glas, Hohlkugeln, Titandioxid, Zirkonoxid, Eisenoxide, gemahlene Mineralien, Farbpigmente, soweit diese als Pulver vorliegen, d.h. eine Korngröße zwischen 1 bis 200 µm aufweisen, insbesondere zwischen 3 bis 100 µm. Solche Füllstoffe liegen nach dem Mischen im PU-Klebstoff fein verteilt vor. Zugesetzte Zeolithe wirken gleichzeitig als Trocknungsmittel. Beim 2K-PU-Klebstoff können die Pigmente auch anteilig in der Komponente B enthalten sein. Die Menge beträgt 1 bis 30 Gew.-%, bevorzugt von 3 bis 25 Gew-%.

Die erfindungsgemäßen Klebstoffe können gegebenenfalls zusätzlich Katalysatoren enthalten, die die Vernetzung des PU-Prepolymeren nach der Applikation beschleunigen. Als erfindungsgemäß einsetzbare Katalysatoren eignen sich z.B. die metallorganische Verbindungen des Zinns, Eisens, Titans, Zirkons oder Wismuts, wie Zinn(II)salze von Carbonsäuren, Dialkyl-Zinn(IV)-Carboxylate, Titan- oder Zirkonalkoxide, Ti oder Zr-Chelatverbindungen, Eisen II oder Eisen III- Salze oder Wismutcarboxylate. Zusätzlich geeignet sind auch aliphatische tertiäre Amine insbesondere bei cyclischer Struktur, beispielsweise Triethanolamin, Trimethanolamin, Diethanolhexylamin, Diaza-bicyclo-octan (DABCO), Triethylamin, Dimethylbenzylamin, Diazabicycloundecen (DBU) Dimorpholinodiethylether (DMDEE) oder Di-(2,6-Dimethylmorpholinoethyl)ether. Die Katalysatoren können auch in oligomerisierter oder polymerisierter Form vorliegen. Dabei soll die Menge unter 2 Gew.% des Klebstoffs betragen.

Als Stabilisatoren im Sinne dieser Erfindung sind einerseits Stabilisatoren zu verstehen, die eine Viskositätsstabilität des Polyurethanprepolymeren während der Herstellung, Lagerung bzw. Applikation bewirken, beispielsweise Carbonsäurechloride oder p-Toluolsulfonylisocyanat. Die Mengen sollen dabei 0,05 bis 1 Gew.-% betragen. Weiterhin sind als Stabilisatoren im Sinne dieser Erfindung Antioxidantien, UV-Stabilisatoren oder Hydrolyse-Stabilisatoren zu verstehen. Wenn das PU-Prepolymer überwiegend aus Polyetherbausteinen aufgebaut ist, sind hauptsächlich Antioxidantien, ggf. in Kombination mit UV-Schutzmitteln, notwendig. Bestehen wesentliche Bestandteile des Polyurethanprepolymers aus Polyesterbausteinen, werden auch Hydrolyse-Stabilisatoren eingesetzt.

Der erfindungsgemäße Klebstoff kann auch Haftvermittler enthalten. Es kann sich dabei um reaktive Substanzen handeln, die mit der Substratoberfläche eine Reaktion eingehen können. Als Haftvermittler werden vorzugsweise organofunktionelle Silane wie hydroxyfunktionelle, (meth)acryloxyfunktionelle, mercaptofunktionelle, aminofunktionelle oder epoxyfunktionelle Silane verwendet. Solche Verbindungen sind dem Fachmann bekannt.

Das PU-Prepolymere kann zusätzlich ein Harz enthalten. Dabei handelt es sich um flüssige bis feste organische Produkte, für die eine mehr oder weniger breite Verteilung der relativen Molmasse charakteristisch ist. Sie weisen meistens eine amorphe Struktur auf. Es können die bekannten Harze verwendet werden, seien sie natürlichen oder synthetischen Ursprungs. Die natürlichen Harze können sowohl pflanzlicher als auch tierischer Herkunft sein oder auch deren Derivate. Beispiele dafür sind Harnstoff-, Melamin-, Kohlenwasserstoff-, Terpen-, Cumaron/Inden-, Furan-, Aldehyd-, Keton-, Keton-/Aldehyd-, Phenol-, Alkyd-, Glycerinester-, Polyester-, Epoxid-, Polyamid- und Isocyanat-Harze. Diese Harze können mit Isocyanaten reaktive Gruppen enthalten, oder sie weisen keine solchen Gruppen auf.

Solche Additive sind dem Fachmann bekannt. Die einzusetzenden Hilfsstoffe können mit der Komponente A, dem Prepolymeren gemischt werden, soweit sie keine mit NCO-Gruppen reaktive Gruppen aufweisen, insbesondere auch keine Feuchtigkeit enthalten. Generell sind die Additive so zuzusetzen, dass Mischbarkeit und Stabilität in dem Klebstoff gegeben ist.

Aus den PU-Prepolymeren können die erfindungsgemäßen 2K-Polyurethan-Klebstoffe hergestellt werden. Dabei werden die Komponenten getrennt gelagert und vor der Applikation gemischt. Die zweite Komponente B enthält OH-haltige Verbindungen, die mit NCO-Gruppen vernetzen können. Diese enthält einen oder mehrere Polyole, wobei es sich um niedermolekulare Polyole oder um Polymere mit OH-Gruppen handeln kann. Diese Komponente B soll ebenfalls bei Raumtemperatur flüssig sein.

Als Polyole der Komponente B sind die oben genannten Polyole geeignet, wie Polyesterpolyole, Polyetherpolyol oder Alkylenpolyole. Beispiele weiterer geeigneter Polyole sind aromatische Polyole, Zuckeralkohole, Polyetherdiole oder-Triole, Polyester-polyole, Poly(meth)acrylatpolyole, olefinische Polyole, wie Hydroxy-Polybutene, Hydroxy-Polyisoprene, Polycarbonate, Polylactone, OH-haltige Polyamide oder andere Polyole, solange sie in der Vernetzerkomponente B homogen mischbar sind.

Als OH-Gruppen-haltige Bestandteile können insbesondere flüssige Polyole mit einer Funktionalität von 2 bis 5 ausgewählt werden. Es kann sich um einen oder mehrere der oben aufgeführten Polyole handeln. Dabei kann das Molekulargewicht auch höher liegen, es kann beispielsweise bis 10000 g/mol betragen. Bevorzugt weisen diese Polyole eine Funktionalität über zwei auf und können die Vernetzungsdichte des vernetzten Klebstoffs erhöhen.

In den erfindungsgemäßen 2K-PU-Klebstoffen sind Additive und Hilfsstoffe in der NCOreaktiven PU-Prepolymerkomponente enthalten, insbesondere werden Pigmente oder Füllstoffe aber der OH-Gruppen-haltigen Komponente zugesetzt. Die Menge der OH-Gruppen-haltigen Komponente wird so zur Komponente A gewählt, dass ein NCO:OH-Verhältnis erhalten wird, das einen geringen Überschuss an Isocyanatgruppen aufweist. Beispielsweise soll das NCO:OH-Verhältnis von 1,01 bis 2:1, insbesondere von 1,05 bis 1,5:1 betragen. Dabei werden alle NCO-Gruppen der Komponente A berücksichtigt, solche am PU-Polymer und solche aus den Oligomeren. Die zwei Komponenten werden bis zur Anwendung getrennt gelagert und unmittelbar vor Anwendung gemischt und dann als Klebstoff eingesetzt.

Die erfindungsgemäß geeigneten monomerarmen Prepolymere besitzen eine hohe Viskosität. Daher sind diese zu einer direkten Applikation als Klebstoff weniger geeignet. Die Viskosität eines erfindungsgemäßen 2K-Klebstoffs soll zwischen 10000 bis 1000000 mPas betragen, bevorzugt bis zu 200000 mPas, insbesondere unterhalb von 100000 mPas, gemessen bei Applikationstemperatur. Diese soll insbesondere zwischen 15 und 50°C liegen, insbesondere soll die Viskosität bei Raumtemperatur (25°C) vorliegen. Über die Menge der Oligomere der aliphatischen Diisocyanate kann die Viskosität eingestellt werden. In einer bevorzugten Ausführungsform kann der PU-Klebstoff frei von organischen Lösemitteln mit einem Siedepunkt unter 160°C sein. Damit ist es möglich solche Klebstoffe aus einer üblichen Kartusche von Hand auszubringen. Alternativ können diese auch über Pumpen, Schläuche und Auftragsdüsen aufgetragen werden. Es ist dem Fachmann bekannt, dass fließfähige Stoffe ähnlicher Viskosität besonders einfach und anwendungssicher zu vermischen sind. Deswegen ist es zweckmäßig , dass beide Komponenten ähnliche Viskositäten aufweisen. Ein Mischen kann beispielsweise durch an sich bekannte Statikmischer erfolgen. Auch dynamische Mischer sind geeignet.

Die erfindungsgemäßen Klebstoffe müssen eine Fließgrenze aufweisen. Darunter ist zu verstehen, dass ein aufgetragener Klebstoff nicht von selbst verfließt. Er soll standfest sein. Dabei werden die Komponenten gemischt und unmittelbar danach beurteilt. Entsprechend den Anforderungen soll ein Klebstoff erst durch Einwirken einer äußeren Kraft zum Fließen gebracht werden. Das kann im Praxistest festgestellt werden. Beispielsweise kann eine Masse in definierter Schichtdicke von ca. 1 cm aufgetragen werden, diese wird dann senkrecht gestellt und ein Abrutschen der Masse unter Schwerkraft überprüft. Erfindungsgemäße Klebstoffe müssen standfest sein, d.h. eine Fließgrenze aufweisen.

Wird bei Produkten mit Fließgrenze die Schubspannung im Verhältnis zum Schergefälle gemessen, tritt eine Änderung des Schergefälles erst über einem Mindestwert der Schubspannung auf. Die dieser Fließgrenze entsprechende Schubspannung soll gemäß der Erfindung weniger als 100 Pa betragen, gemessen bei einer Scherrate von 0,1 sec⁻¹. Bei höherem Schergefälle steigt die Schubspannung linear oder nicht linear an. Es handelt sich nach überschreiten der Fließgrenze um newtonisches (nach Bingham) oder thixotropes (nach Casson) Fließverhalten, wobei in jedem Fall eine Fließgrenze vorhanden sein muss. Allgemeine Feststellungen zur Fließgrenze und Viskositätsverhalten sind in H.-G. Elias, Makromoleküle, Bd1, S. 890 bis 905 dargestellt. Die Messungen wurden mit einen Ares-Viskosimeter der Fa TA Instruments mit einem Platte-Platte-System bei einem Messspalt von 1 mm durchgeführt bei 25°C. Insbesondere soll beim erfindungsgemäßen 2K-Klebstoff die Schubspannung bei 25°C unter 100 Pa liegen.

Die erfindungsgemäßen Klebstoffe enthalten in einer bevorzugten Ausführungsform keine Weichmacher, sondern nur die erfindungsgemäß angegebenen Oligomeren von aliphatischen Diisocyanaten. In einer weiteren Ausführungsform sind die erfindungsgemäßen Klebstoffe frei von organischen Lösemitteln mit einem Siedepunkt unterhalb von 160°C, insbesondere von unter 200°C. Eine besondere Ausführungsform wählt die Isocyanate für die Prepolymersynthese insbesondere aus TDI, MDI, deren Isomere oder Mischungen, eine weitere Ausführungsform wählt die Polyole aus Polyethylenglykolen, Polypropylenglykolen oder Copolymere mit einem Molekulargewicht unter 1500 g/mol. Insbesondere sollen die Klebstoffe einen Haftvermittler auf Silanbasis enthalten und zusätzlich einen Katalysator.

In einer bevorzugten Ausführungsform besteht der 2K-Klebstoff aus einer Komponente A mit 3 bis 35 Gew.-% eines erfindungsgemäßen geeigneten PU-Prepolymers mit NCO-Gruppen, 2 bis 40 Gew.-% Oligomere von aliphatischen Isocyanaten, 0,5 bis 15 Gew.-% Pigmente und/oder Füllstoffe und/oder Additive, sowie einer Komponente B enthaltend 5 bis 40 Gew.-%, di- oder/und polyfunktionelle Polyole, 5 bis 40 Gew.-% Pigmente, Füllstoffe und/oder Additive. Dabei soll die Summe aller Bestandteile aus Komponenten A und B 100 % ergeben.

Die erfindungsgemäßen PU-Klebstoffe können auf verschiedene Substrate aufgetragen werden. Durch die ausgewählte Viskosität können sie bei Raumtemperatur verarbeitet werden. Sie fließen gut an das Substrat an und können in dicker Schicht appliziert werden. Die Klebstoffe vernetzen durch die OH-Gruppen-haltige zweite Komponente oder auch durch Luftfeuchtigkeit. Dabei kann die Vernetzung durch erhöhte Temperatur beschleunigt werden.

Als Substrate sind die bekannten Substrate aus Holz, Kunststoff, Metall, Keramik oder Stein geeignet. Dabei soll die Oberfläche von anhaftenden losen Staub-teilchen gereinigt werden, danach kann der Klebstoff aufgetragen werden und das zweite Substrat auf das erste Substrat gebracht werden. Je nach Dauer der Reaktionszeit ist es zweckmäßig, gegebenenfalls beide Substrate gegeneinander zu fixieren.

Nach Vernetzung zeigen die verklebten Substrate eine stabile Verklebung miteinander. Die Haftung zu der Oberfläche ist gut, die Kohäsion innerhalb des Klebstoffs ist ebenfalls hervorragend. Durch die Reaktion der Zusatzmittel aus aliphatischen Isocyanaten mit OH-haltigen Klebstoffbestandteilen werden diese fest in das Polymer eingebaut und können nicht migrieren. Sie erhöhen die Vernetzungsdichte. Eine Beeinträchtigung der Verklebung durch migrierende Bestandteile kann vermieden werden.

Ein weiterer Vorteil der erfindungsgemäßen Klebstoffe ist die gute Lagerstabilität. Dabei zeigt sich auch bei forcierter Lagerung nur ein geringer Anstieg der Viskosität. Die Viskositäts-vermindernden Zusatzmittel bleiben stabil im Klebstoff gemischt, eine Phasentrennung tritt nicht ein.

Weiterhin ist es vorteilhaft einfache Mischungsverhältnisse, beispielsweise zwischen 1,5 : 1 bis 1 : 1,5 der Einzelkompo-nenten für 2K-Klebstoffe einstellen zu können, ohne den Klebstoff in seinen Eigenschaften zu ändern.

Ein anwendungstechnischer Vorteil liegt in der niedrigen Viskosität, so können 1K- oder 2K-Produkte aus Kartuschen von Hand appliziert werden. Nach dem Auftragen und gegebenenfalls Glätten der Schicht ist diese standfest. Sie rutscht nicht von selbst ab und fließt nicht zu tieferen Stellen des Substrats. Auch eine Applikation aus Auftragsdüsen ist möglich, durch die gewählte Viskosität können die Zusammensetzung auch über Schläuche zugeführt werden. Eine Standfestigkeit bildet sich an der Auftragsfläche.

Die nachfolgenden Beispiele erläutern die Erfindung.

Messmethoden gemäß Erfindung und Beispiele:
Viskosität: Brookfield-Viskosimeter, nach EN ISO 2555
Molekulargewicht: zahlenmittleres Molekulargewicht (M_{N}), wie mit GPC bestimmbar, Standard Polystyrol
Fließgrenze: Ares-Viskosimeter (Fa. TA Instruments) Platte-Platte System,
Messspalt 1 mm, T = 25°C.
Zugscherfestigkeit: DIN EN 1465

### Prepolymerherstellung:

### Prepo1:

Zur fünffachen Molmenge (2,4-TDI) wird die einfache Molmenge Polypropylen-glycol 400 langsam zugegeben und nach Abklingen der exothermen Reaktion 2 Stunden auf 80°C erwärmt. Danach erfolgt Entfernung des überschüssigen Iso-cyanats mittels Dünnschichtverdampfung bei Drücken bis zu 0,07 mbar und Temperaturen zwischen 165 und 170°C. Der Gehalt an monomerem 2,4-TDI liegt dann unter 0,02 %, und die Viskosität beträgt 266 000 mPas bei 25 °C. Das Produkt wird mit 0,2 % Benzoylchlorid stabilisiert.

### Prepo2:

Analog werden Präpolymere mit Polypropylenglycol der mittleren Molmassen von 575 g/mol hergestellt. Dabei kommen Mischungen aus Polypropylenglycol 400 und 1000 zum Einsatz. Der Gehalt an freiem 2,4-TDI liegt unter 0,02 %, und die bei 25°C bestimmte Viskosität beträgt 133 000 mPas.

### Prepo3:

Analog wird ein Präpolymer mit Polypropylenglykol der mittleren Molmassen von 675 g/mol hergestellt. Dabei kommen Mischungen aus Polypropylenglycol 400 und 1000 zum Einsatz. Der Gehalt an freiem 2,4-TDI liegt unter 0,02 %, und die bei 25°C bestimmte Viskosität beträgt 74 000 mPas.

### Prepo4:

Nach gleichem Versuchsschema wird auch (4,4'-MDI) mit Polypropylenglycol 750 umgesetzt. Die Dünnschichtverdampfung erfolgt bei gleichem Druck jedoch im Temperaturbereich um 200°C. Der Gehalt an freiem 4,4'-MDI liegt bei 0,08 %, die Viskosität bei 25°C bei 212 000 mPas.

Alle Prepolymere sind hochviskos und ziehen bei der Verarbeitung Fäden.

Alle Prepolymere fließen langsam und sind nicht standfest.

### Beispiel 1 (nicht erfindungsgemäß)

Prepolymer 1 wird mit den nachfolgend angegebenen Mengen Hexamethylendüsocyant (HDI)-Trimer, Carbonsäureester, Füllstoffen und Katalysator gemischt.

| | Masse-% |
|---|---|
| Prepolymer 1 | 58,6 |
| HDI-Trimer | 15,0 |
| Isobutylllaurat | 6,5 |
| Gecoatetes Calciumcarbonat | 15,0 |
| Aerosil R 202 | 4,0 |
| 2,2'-Dimorpholinodiethlether | 0,9 |

Eine horizontal auf eine senkrechte Holzplatte aufgetragene Raupe dieses Klebstoffes von 1 cm Höhe fließt nicht ab. Die Fließgrenze des Produktes liegt bei 28 Pa (Schergefälle 0,1 s⁻¹).

Buchenholzprüfkörper (10x2 cm) werden verklebt und nach 24 Std. getestet. Die Zugscherfestigkeit beträgt 4,3 MPa.

### Beispiel 2 (nicht erfindungsgemäß)

Prepolymer 1 wird durch Prepolymer 3 ersetzt und ebenfalls mit HDI-Trimer und den in Beispiel 1 angegebenen Zusatzstoffen gemischt.

Eine horizontal auf eine senkrechte Holzplatte aufgetragene Raupe dieses Klebstoffs von 1 cm Höhe fließt nicht ab. Die Fließgrenze des Produktes liegt bei 22 Pa (Schergefälle 0,1 s⁻¹).

Die Zugscherfestigkeit von verklebten Buchenholzprüfkörpern beträgt 3,3 MPa.

### Beispiel 3 (erfindungsgemäß)

Die nachfolgend angegebene OH-Komponente wird mit einer NCO-Komponente, die auf Prepolymer 1 und HDI-Trimer basiert, im Masseverhältnis 1: 1 gemischt.

OH-Komponente (Komponente B)

| | Masse-% |
|---|---|
| Rizinusöl | 39,4 |
| Voranol CP 260 | 5,5 |
| Desmophen 1400BT | 20,0 |
| Calciumcarbonat | 14,4 |
| Gecoatetes Calciumcarbonat | 11,5 |
| Molsieb 3 A | 5,2 |
| Aerosil R202 | 3,5 |
| DABCO 33LV | 0,5 |

NCO-Komponente (Komponente A)

| | Masse -% |
|---|---|
| Prepolymer 1 | 24,1 |
| HDI-Trimer | 57,4 |
| Barimsulfat | 9,0 |
| Molsieb 3 A | 5,0 |
| Aerosil R202 | 4,5 |

Mit Hilfe einer Form wird ein Quader von 2 x 5 cm Seitenlänge auf ein gereinigtes Stahlblech aufgetragen. Die Dicke des Klebstoffquaders beträgt 1 cm. Nach Entfernung der Form wird das Blech aufrecht gestellt. Der Klebstoffquader behält seine Form und läuft nicht ab. Die Fließgrenze des gemischten Produktes (ohne Katalysator) liegt bei 24 Pa (Schergefälle 0,1 s⁻¹).

Die Zugscherfestigkeit von Aluminiumprüfkörpern beträgt 7,3 MPa.

## Patentansprüche

1. Monomerarmer vernetzbarer 2K-Polyurethanklebstoff bestehend aus einer NCO-Gruppen-haltigen Komponente A und zusätzlich einer Komponente B, die Polyole enthält, wobei beide Komponenten getrennt gelagert werden, enthaltend mindestens ein Polyurethanprepolymer mit NCO-Gruppen und einem zahlenmittleren Molekulargewicht (Mn), wie mit GPC bestimmbar, von unter 5000 g/mol mit einem Gehalt an monomeren Diisocyanaten unter 0,5 Gew.% bezogen auf das Prepolymer, wobei bezogen auf den Klebstoff 1 bis 30 Gew.-% Pigmente und/oder Füllstoffe sowie 1 bis 40 Gew.% Oligomere von aliphatischen Diisocyanaten enthalten sind, sowie übliche Additive und Hilfsstoffe, ausgewählt aus Thixotropiermitteln, Katalysatoren, Harzen, Alterungsschutzmitteln, Stabilisatoren, Farbstoffen, Haftvermittlern oder Netzmitteln, wobei Komponente A 3 bis 35 Gew.-% des PU-Prepolymers mit NCO-Gruppen, 2 bis 40 Gew.-% der Oligomere von aliphatischen Isocyanaten, 0,5 bis 15 Gew.-% der Pigmente und/oder Füllstoffe und/oder Additive enthält, und Komponente B 5 bis 40 Gew.-% di- oder/und polyfunktionelle Polyole sowie 5 bis 40 Gew.-% der Pigmente, Füllstoffe und/oder Additive enthält, wobei die Summe aller Bestandteile aus Komponenten A und B 100 % ergibt.

2. PU-Klebstoff nach Anspruch 1, **dadurch gekennzeichnet, dass** das Prepolymer durch Umsetzung von zwei- oder drei-funktionellen Polyetherpolyolen und/oder Polyesterpolyolen mit einem Überschuss an aromatischen Diisocyanaten hergestellt wird.

3. PU-Klebstoff nach Anspruch 2, **dadurch gekennzeichnet, dass** der Gehalt von monomeren Diisocyanaten des Prepolymeren durch Destillation im Vakuum vermindert wird.

4. PU-Klebstoff nach einem der Ansprüche 1 oder 3, **dadurch gekennzeichnet, dass** 2 bis 25 % Gew. Oligomere enthalten sind, ausgewählt aus Biureten, Isocyanuraten oder Uretdionen auf Basis von aliphatischen Diisocyanaten, insbesondere von IPDI, HDI oder H12-MDI.

5. PU-Klebstoff nach einem der Ansprüche 1 bis 4, **dadurch gekennzeichnet, dass** die Oligomere weniger als 0,5 Gew.-% monomeres aliphatisches Diisocyanat enthalten.

6. PU-Klebstoff nach einem der Ansprüche 1 bis 5, **dadurch gekennzeichnet, dass** der Klebstoff insgesamt weniger als 0,3 Gew.-% monomere Diisocyanate enthält.

7. PU-Klebstoff nach einem der Ansprüche 1 bis 6, **dadurch gekennzeichnet, dass** der Klebstoff frei von organischen Lösemitteln ist.

8. PU-Klebstoff nach einem der Ansprüche 1 bis 7, **dadurch gekennzeichnet, dass** der Klebstoff nach Applikation standfest ist.

9. Verwendung eines monomerarmen PU-Klebstoffes der eine Fließgrenze aufweist nach Anspruch 1 bis 8 in Kartuschen.

## Claims

1. A crosslinkable 2K polyurethane adhesive having a low monomer content, consisting of a NCO group-containing component A and additionally a component B containing polyols, wherein the two components are stored separately, containing at least one polyurethane prepolymer having NCO groups and a number average molecular weight (Mn), as can be determined by GPC, of below 5,000 g/mol, having a content of monomeric diisocyanates of below 0.5 wt.% based on the prepolymer, wherein, based on the adhesive, from 1 to 30 wt.% pigments and/or fillers and from 1 to 40 wt.% oligomers of aliphatic diisocyanates are contained, and common additives and auxiliaries selected from thixotropic agents, catalysts, resins, anti-ageing agents, stabilizers, dyes, adhesion promoters or wetting agents are contained, wherein component A contains from 3 to 35 wt.% of the PU prepolymer having NCO groups, from 2 to 40 wt.% of the oligomers of aliphatic isocyanates, from 0.5 to 15 wt.% of the pigments and/or fillers and/or additives, and component B contains from 5 to 40 wt.% bifunctional or/and polyfunctional polyols and from 5 to 40 wt.% of the pigments, fillers and/or additives, wherein the sum of all the constituents comprising components A and B adds up to 100%.

2. The PU adhesive according to claim 1, **characterized in that** the prepolymer is produced by reacting bifunctional or trifunctional polyether polyols and/or polyester polyols with an excess of aromatic diisocyanates.

3. The PU adhesive according to claim 2, **characterized in that** the content of monomeric diisocyanates in the prepolymer is reduced by vacuum distillation.

4. The PU adhesive according to one of claims 1 or 3, **characterized in that** from 2 to 25 wt.% oligomers are contained, selected from biurets, isocyanurates or uretdiones based on aliphatic diisocyanates, in particular on IPDI, HDI or H12MDI.

5. The PU adhesive according to one of claims 1 to 4, **characterized in that** the oligomers contain less than 0.5 wt.% monomeric aliphatic diisocyanate.

6. The PU adhesive according to one of claims 1 to 5, **characterized in that** the adhesive contains overall less than 0.3 wt.% monomeric diisocyanates.

7. The PU adhesive according to one of claims 1 to 6, **characterized in that** the adhesive is free of organic solvents.

8. The PU adhesive according to one of claims 1 to 7, **characterized in that** the adhesive is stable after application.

9. The use of a PU adhesive, having a low monomer content and a yield point, according to claims 1 to 8 in cartridges.

## Revendications

1. Colle polyuréthane 2K réticulable pauvre en monomère, constituée d'un composant A contenant des groupes NCO et, en plus, d'un composant B qui contient des polyols, les deux composants étant stockés séparément, contenant au moins un prépolymère polyuréthane avec des groupes NCO et un poids moléculaire moyen en nombre (Mn), comme on peut le déterminer par CPG, inférieur à 5 000 g/mol, avec une teneur en diisocyanates monomères inférieure à 0,5 % en poids rapporté au prépolymère, où sont contenus, rapporté à la colle, 1 à 30 % en poids de pigments et/ou de charges, ainsi que 1 à 40 % en poids d'oligomères de diisocyanates aliphatiques, ainsi que des additifs et adjuvants habituels choisis parmi des agents de thixotropie, des catalyseurs, des résines, des agents antivieillissement, des stabilisants, des colorants, des auxiliaires d'adhésion ou des agents réticulants, le composant A contenant 3 à 35 % en poids du prépolymère polyuréthane à groupes NCO, 2 à 40 % en poids des oligomères d'isocyanates aliphatiques, 0,5 à 15 % en poids des pigments et/ou charges et/ou additifs, et le composant B contenant 5 à 40 % en poids de polyols di- ou polyfonctionnels, ainsi que 5 à 40 % en poids des pigments, charges et/ou additifs, la somme de tous les constituants des deux composants A et B donnant 100 %.

2. Colle polyuréthane selon la revendication 1, **caractérisée en ce que** le prépolymère se confectionne par conversion de polyols polyéthers bi ou trifonctionnels et/ou de polyols polyesters avec un excès de diisocyanates aromatiques.

3. Colle polyuréthane selon la revendication 2, **caractérisée en ce que** la teneur en diisocyanates monomères du prépolymère est réduite par distillation sous vide.

4. Colle polyuréthane selon une des revendications 1 à 3, **caractérisée en ce qu'**elle contient 2 à 25 % en poids d'oligomères choisis parmi des biurets, des isocyanurates ou des uretdiones à base de diisocyanates aliphatiques, en particulier d'IPDI, HDI ou H12-MDI.

5. Colle polyuréthane selon une des revendications 1 à 4, **caractérisée en ce que** les oligomères contiennent moins de 0,5 % en poids de monomère diisocyanate aliphatique.

6. Colle polyuréthane selon une des revendications 1 à 5, la colle contenant en tout moins de 0,3 % en poids de diisocyanates monomères.

7. Colle polyuréthane selon une des revendications 1 à 6, la colle étant exempte de solvants organiques.

8. Colle polyuréthane selon une des revendications 1 à 7, la colle étant stable après application.

9. Utilisation d'une colle polyuréthane pauvre en monomère, qui présente une limite d'élasticité selon une des revendications 1 à 8, en cartouches.
